# EUROPÄISCHE PATENTSCHRIFT

(11) **EP 2 505 464 B1**
(45) Veröffentlichungstag und Bekanntmachung des Hinweises auf die Patenterteilung: **24.07.2013**
(21) Anmeldenummer: 11160104.3
(22) Anmeldetag: 29.03.2011
(51) Int. Cl.: B62J 1/00, B62J 1/02, B62J 1/08

(54) **Fahrradsattel**
Bicycle saddle
Selle de vélo

(43) Veröffentlichungstag der Anmeldung: 03.10.2012
(73) Patentinhaber: Rose Versand GmbH, 46395 Bocholt (DE)
(72) Erfinder: Heimerdinger, Andreas, 22605 Hamburg (DE)
(74) Vertreter: Kluin, Jörg-Eden

(56) Entgegenhaltungen:
- EP-A2- 2 052 955
- WO-A1-2006/120630
- DE-U1-202007 008 321
- US-A- 5 692 801

## Beschreibung

Die Erfindung betrifft einen Fahrradsattel mit einer Sattelschale und mit Federelementen. Derartige Sättel sind bereits bekannt. Nachteilig bei bekannten Sätteln ist ihr relativ hohes Gewicht. Die US 5,692,801 zeigt einen Sattel, bei dem das Sattelgestell mit seinem hinteren Bereich in Federvorsprünge greift. Zwischen den Federvorsprüngen und dem übrigen Sattel können Dämpfungselemente angeordnet sein. Aus der EP 2 052 955 A2 ist ein Sattel bekannt, der eine Basis aufweist, auf der beabstandet die Sattelschale angeordnet ist. Zwischen der Basis und der Sattelschale sind Dämpfungselemente vorgesehen. Die DE 20 2007 008 321 U1 zeigt einen Sattel, bei dem die hinteren Enden des Sattelgestells in Aufnahmen eines ovalen Federelements greifen. Zwischen dem Federelement und der Sattelschale sind zwei harte Dämpfungselemente als Federwegbegrenzer vorgesehen. Die WO 2006/120630 A1 zeigt einen Sattel mit mindestens einem Dämpfungselement.

Die Erfindung hat es sich zur Aufgabe gemacht, einen Fahrradsattel zu schaffen, welcher möglichst gewichtssparend ist. Er wird nachfolgend auch lediglich mit "Sattel" bezeichnet.

Diese Aufgabe wird durch den in Anspruch 1 wiedergegebenen Fahrradsattel und ein Suspensionsfahrradsattelsystem, das im Folgenden auch lediglich als Sattelsystem bezeichnet wird, gelöst.

Der erfindungsgemäße Fahrradsattel weist eine Sattelschale auf. Darüber hinaus umfasst er Federelemente, die in die Sattelschale integriert sind.

Da die Federelemente in die Sattelschale integriert sind, sind sie also bevorzugt nicht zwischen Sattelschale und einem Sattelgestell angeordnet, sondern das Sattelgestell bzw. etwa vorhandene Sattelgestellaufnahmen setzt bzw. setzen bevorzugt an Elementen der Sattelschale an. Weiter bevorzugt setzt bzw. setzen das Sattelgestellt bzw. die Sattelgestellaufnahmen ausschließlich an Elementen der Sattelschale an. Es besteht also kein direkter Kontakt zwischen dem Sattelgestell bzw. den Sattelgestellaufnahmen und den Federelementen.

Die Federelemente sind vorzugsweise unterhalb der dem Fahrer zugewandten Oberfläche der Sattelschale angeordnet. Es handelt sich hierbei also nicht um eine - gegebenenfalls zusätzlich vorhandene - Polsterung, die die Sitzfläche weicher macht und dadurch Druck auf den Fahrer verteilt.

Mit der Pluralform "Federelemente" wird im Rahmen dieser Druckschrift auch ein einziges Federelement bezeichnet. Vorzugsweise sind mindestens zwei, weiter bevorzugt genau zwei Federelemente vorgesehen.

Vorzugsweise umfassen die Federelemente Elastomerelemente. Besonders bevorzugt werden die Federelemente durch Elastomerelemente gebildet. Hierdurch kann auch die Funktion der Dämpfung von den Federelementen übernommen werden. Die Federelemente sind in dieser Ausführungsform gleichzeitig Dämpfungselemente.

Die Federelemente sind mittels Hinterschneidungen in die Sattelschale integriert.

Die Hinterschneidungen sind zumindest auch durch Zungen gebildet, die in Fahrtrichtung nach hinten gerichtet unten aus der Sattelschale hervorstehen. Hierdurch wird eine Integration der Federelemente in die Sattelschale möglich, die sich durch geringstes Gewicht bei sehr guter Kräfteverteilung auszeichnet.

Es ist ein Sattelgestell vorgesehen, welches, gegebenenfalls mittels Sattelgestellaufnahmen, an den Zungen ansetzt.

Vorzugsweise sind die Federelemente auswechselbar. Besonders bevorzugt sind verschiedene Elemente, ganz besonders bevorzugt verschieden harte Elemente vorgesehen. Auf diese Weise kann der Nutzer die Feder-/ Dämpfungseigenschaften individuell auswählen. Es können verschieden harte Federelemente für die verschiedenen Fahrergewichte sowie die verschiedenen Ansprüche an den Komfort angeboten werden. Die Federelemente können bereits vormontiert sein und Sättel mit verschiedenen vormontierten Federelementen als Sattelsystem angeboten werden, oder es können mehrere verschiedene Federelemente mitverkauft werden und der Kunde setzt die passenden ein bzw. tauscht sie nach Belieben aus. Sobald die Federelemente ihre erwünschten Eigenschaften verloren haben, können sie problemlos ausgetauscht werden.

In der bevorzugten Ausführungsform ist die Sattelschale derart ausgebildet, dass sie Zugbelastungen, die durch das Fahrergewicht entstehen, aufnimmt. Vorzugsweise ist ein Sattelgestell vorhanden, welches die Sattelschale lediglich an der Sattelspitze und im hinteren Bereich des Sattels abstützt. Wenn der Sattel belastet wird, dann kann es zu einer geringfügigen Durchbiegung der Sattelschale kommen. Hierbei treten zwischen den Abstützungen Zugspannungen auf. Diese Zugspannungen werden bevorzugt zumindest in überwiegendem Maße nicht durch beispielsweise Schubspannungen in den Federelementen, sondern durch die Sattelschale selbst aufgenommen. Insbesondere in der Ausführungsform, in der die Hinterschneidungen durch Zungen gebildet sind, die in Fahrtrichtung nach hinten gerichtet unten aus der Sattelschale hervorstehen und das Sattelgestell an den Zungen ansetzt bzw. die hinteren Abstützungen auf diesen Zungen angeordnet sind, kann die Sattelschale diese Zugspannungen besonders gut aufnehmen, denn die Zungen verlaufen parallel zur Zugkraft.

Vorzugsweise ist ein Sattelgestell vorgesehen, welches keine Unterschiede zu dem Sattelgestell eines herkömmlichen ungefederten Rennradsattels aufweist. Weiter bevorzugt wird das Sattelgestell auch nicht anders belastet, als dies bei einem Sattelgestell eines herkömmlichen ungefederten Rennradsattels der Fall ist. Insbesondere greifen bevorzugt nicht etwa Elemente (beispielsweise Abstützungselemente) des Sattels an das Sattelgestell an anderer Stelle als zwischen den vorderen und hinteren Enden des Sattelgestells an. Daher kann das Sattelgestell auf bewährte Art gewichtsoptimiert aufgebaut sein.

Die Erfindung umfasst auch ein Suspensionsfahrradsattelsystem mit einem vorbeschriebenen Fahrradsattel.

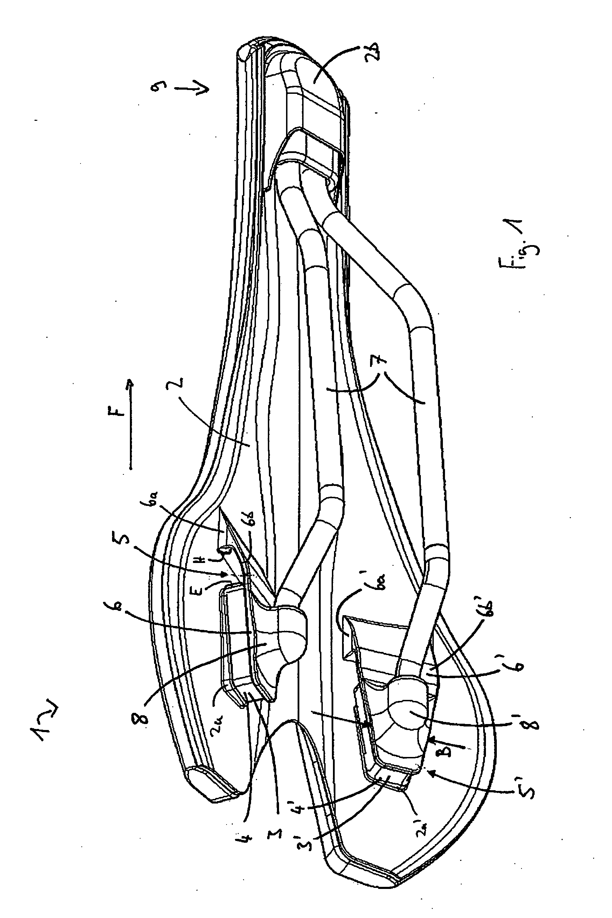

Die Erfindung soll nun anhand eines in der Zeichnung gezeigten Ausführungsbeispiels näher erläutert werden. Fig. 1 zeigt einen erfindungsgemäßen Sattel in dreidimensionaler Ansicht mit Blick von schräg unten.

Der erfindungsgemäße Sattel 1 weist ein Sattelgestell 7 auf, welches aus zwei nebeneinander angeordneten Rohren besteht, die in einem mittleren Bereich parallel zueinander verlaufen, in dem der Sattel mittels einer nicht dargestellten Sattelklemme mit einer Sattelstütze verbindbar ist. Die Rohre verlaufen von diesem Bereich nach vorne leicht nach oben geneigt aufeinander zu, bis sie im Bereich der Sattelnase 9 den vorderen Auflagebereich für die Sattelschale 2 bilden. Die Begriffe "vorne" und "hinten" werden in Bezug auf die Fahrtrichtung F verwendet. Die Sattelschale 2 ist unter anderem aus Gewichtsgründen nicht ganz steif ausgelegt, sondern kann sich bei Belastung mit dem Fahrergewicht etwas durchbiegen. In Zusammenwirken mit dem steifen Sattelgestell 7 ergeben sich dabei Zugspannungen in der Sattelschale 2.

Im Bereich der Sattelnase 9 bildet die Sattelschale 2 eine nach hinten geöffnete Tasche 2b, die das vordere Ende des Sattelgestells 7 aufnimmt. Durch diese Tasche 2b werden relativ zu dem vorderen Ende des Sattelgestells 7 bestehende, insbesondere durch das Fahrergewicht hervorgerufene Zugspannungen von der Sattelschale gut auf das Sattelgestell 7 übertragen, bzw. die Verbindung mittels Tasche eignet sich bei geringstem Gewicht gut dazu, einer derartigen Kraftübertragung standzuhalten.

Von dem mittleren Bereich nach hinten verlaufen die Rohre des Sattelgestells 7 ebenfalls leicht nach oben geneigt, jedoch voneinander weg. Jedes Rohr endet hinten in einer Sattelgestellaufnahme 8, 8'.

Die Sattelschale 2 weist auf ihrer Unterseite Hinterschneidungen 5, 5' auf, die durch nach hinten unten hervorstehende Zungen 6, 6' gebildet sind. Die Zungen umfassen einen nach unten von der übrigen Sattelschale 2 hervorstehenden Fuß 6a, 6a' und verlaufen von diesem ausgehend im Übrigen weitgehend horizontal nach hinten. Die Füße 6a, 6a' haben in etwa die Form eines geraden Prismas mit einem Dreieck als Grundfläche und sind mit ihrer längsten Erstreckung (welche der Höhe des Prismas entspricht) quer zur Fahrtrichtung F angeordnet. Eine rechteckige Fläche dieses Prismas geht vollflächig in die übrige Sattelschale 2 über. An der gegenüberliegenden "Kante" geht der Fuß 6a, 6a' in die übrige Zunge 6, 6' über. Die übrige Zunge ist flächenförmig und von geringer Dicke. Sie ist trapezförmig. Ihre Breite B verjüngt sich nach hinten. Aufgrund ihrer Flächenform bei geringer Dicke leitet die Zunge 6, 6' die von dem Sattelgestell 7 ausgehenden Druckkräfte nahezu ungehindert in die Federelemente 3, 3' weiter. Die Zungen 6, 6' können einstückig mit der übrigen Sattelschale 2 ausgebildet sein.

Jede Sattelgestellaufnahme 8, 8' ist als nach vorne geöffnete Tasche ausgebildet. Jede Sattelgestellaufnahme 8, 8' ist auf der Unterseite genau einer Zunge 6, 6' angeordnet. Das Sattelgestell 7 setzt also mittels der Sattelgestellaufnahmen 8, 8', an den Zungen 6, 6' an.

Auf der den Sattelgestellaufnahmen 8, 8' gegenüberliegenden Seiten der Zungen 6, 6' sind die Federelemente 3, 3' angeordnet, die als Elastomerelemente 4, 4' ausgebildet sind. Die Federelemente 3, 3' sind unterhalb der dem Fahrer zugewandten Oberfläche der Sattelschale 2 angeordnet. Es handelt sich hierbei also nicht um eine - gegebenenfalls zusätzlich vorhandene - Polsterung. Weder das Sattelgestell 7, noch die Sattelgestellaufnahmen 8, 8' kommen mit den Federelementen 3, 3' in Berührung.

Da die Höhe H des Fußes 6a, 6a' der Zunge 6, 6' nicht ganz so groß ist, wie die Höhe E der Elastomerelemente 4, 4', verläuft der übrige Bereich der Zunge 6, 6' nicht vollständig horizontal und gerade, sondern er weist einen gekrümmten Bereich 6b, 6b' auf. Hierdurch ergibt sich eine besonders vorteilhafte Kräfteverteilung bei einer durch das Fahrergewicht entstehenden, etwa auftretenden Zugbelastung in der Sattelschale 2 zwischen den Zungen 6, 6' und der Sattelnase 9, die die Fü-βe 6a, 6a' von Biegebelastung entlasten kann.

Die Elastomerelemente 4, 4' sind blockförmig. Ihre Form unterscheidet sich von einem Quader dadurch, dass sie keine rechteckige Grundfläche, sondern entsprechend den Zungen 6, 6' eine trapezförmige Grundfläche haben. Es sind weitere, nicht gezeichnete Federelemente 3, 3' vorgesehen, die insbesondere eine von den gezeichneten Federelementen 3, 3' verschiedene Härte aufweisen können.

Die Sattelschale 2 weist gegenüber den Zungen 6, 6' nach unten vorspringende Sockel 2a, 2a' auf, unter denen die Federelemente angeordnet sind. Die Federelemente sind an den Zungen 6, 6' und/oder der übrigen Sattelschale 2 lösbar befestigt. Die lösbare Befestigung kann formschlüssig und/oder kraftschlüssig und/oder stoffschlüssig sein. Im Falle einer stoffschlüssigen Befestigung ist diese, um Lösbarkeit im Sinne einer Entfernbarkeit der Federelemente ohne Beschädigung der Sattelschale unter üblichen Werkstattbedingungen zu gewährleisten beispielsweise als Klebung ausgeführt, wobei der Kleber sich bei Überschreiten einer bestimmten Temperatur lösen lässt.

In den Zungen 6, 6' und/oder in der übrigen Sattelschale 2 können Fortsätze und/oder Ausnehmungen vorgesehen sein, die mit etwaigen komplementären Fortsätzen und/oder Ausnehmungen der Federelemente 3, 3' zusammenwirken können.

Die Federelemente 3, 3' ermöglichen einen kleinen Federweg, der geeignet ist, die den Fahrkomfort besonders störenden häufigen kleinen Stöße bzw. Vibrationen abzumildern.

Die längste Erstreckung der Federelemente 3, 3' verläuft etwa in Fahrtrichtung F. Aufgrund der beschriebenen Integration der Federelemente 3, 3' in die Sattelschale 2 ist es, insbesondere durch Auslegung der Materialeigenschaften der Sattelschale 2, besonders der Zungen 6, 6' und Füße 6a, 6a' möglich, dass auf die Federelemente 3, 3' nur geringe Schubspannungen wirken. Sie können daher auf andere wünschenswerte Eigenschaften, wie geringstes Gewicht und/oder optimale Federung- /Dämpfung optimiert sein. Die Zungen 6, 6' können sowohl die Funktion übernehmen, die Federelemente 3, 3' von Schubspannungen zu entlasten, also auch, (möglicherweise gemeinsam mit den Sattelgestellaufnahmen 8, 8') die Druckkräfte gleichmäßig in die Federelemente 3, 3' einzuleiten bzw. auf die Federelemente 3, 3' zu verteilen.

**Bezugszeichenliste:**

| | |
|---|---|
| 1 | Fahrradsattel |
| 2 | Sattelschale |
| 2a, 2a' | Sockel der Sattelschale |
| 3, 3' | Federelemente |
| 4, 4' | Elastomerelemente |
| 5, 5' | Hinterschneidung |
| 6, 6' | Zungen |
| 6a, 6a' | Fuß |
| 6b, 6b' | gekrümmter Bereich der Zungen |
| 7 | Sattelgestell |
| 8, 8' | Sattelgestellaufnahmen |
| 9 | Sattelnase |
| F | Fahrtrichtung |
| B | Breite der Zunge |
| H | Höhe des Fußes der Zunge |
| E | Höhe des Elastomerelements |

## Patentansprüche

1. Fahrradsattel (1), mit einer Sattelschale (2) und mit Federelementen (3, 3'), mit einem Sattelgestell (7), wobei in die Sattelschale (2) Federelemente (3, 3') integriert sind, wobei die Federelemente (3, 3') mittels Hinterschneidungen (5, 5') in die Sattelschale (2) integriert sind, **dadurch gekennzeichnet, dass** die Hinterschneidungen (5, 5') zumindest Zungen (6, 6') umfassen, die in Fahrtrichtung (F) nach hinten gerichtet unten aus der Sattelschale (2) hervorstehen, wobei das Sattelgestell (7), gegebenenfalls mittels Sattelgestellaufnahmen (8, 8'), an den Zungen (6, 6') ansetzt.

2. Fahrradsattel nach Anspruch 1, **dadurch gekennzeichnet, dass** die Federelemente (3, 3') Elastomerelemente (4, 4') umfassen.

3. Fahrradsattel nach einem der Ansprüche 1 oder 2, **dadurch gekennzeichnet, dass** die Federelemente (3, 3') auswechselbar sind.

4. Fahrradsattel nach einem der Ansprüche 1 bis 3, **dadurch gekennzeichnet, dass** die Sattelschale (2) nicht ganz steif ausgelegt ist, sondern sich bei Belastung mit dem Fahrergewicht etwas durchbiegen kann, so dass sie, in Zusammenwirken mit einem steifen Sattelgestell derart ausgebildet ist, dass sie Zugbelastungen, die durch das Fahrergewicht entstehen, aufnimmt.

5. Fahrradsattel nach einem der Ansprüche 1 bis 4, **dadurch gekennzeichnet, dass** das Sattelgestell (7) keine Unterschiede zu einem Sattelgestell eines herkömmlichen ungefederten Rennradsattels aufweist, also aus zwei nebeneinander angeordneten Rohren besteht, die in einem mittleren Bereich parallel zueinander verlaufen, von diesem Bereich nach vorne leicht nach oben geneigt aufeinander zu verlaufen und von diesem Bereich nach hinten leicht nach oben geneigt voneinander weg verlaufen.

6. Suspensionsfahrradsattelsystem, mit einem Fahrradsattel nach einem der Ansprüche 3 bis 5, und mit einem Set auswechselbarer Federelemente (3, 3'), die unterschiedliche Härten aufweisen.

## Claims

1. A bicycle saddle (1) having a saddle shell (2) and having spring elements (3, 3'), having a saddle frame (7), wherein spring elements (3, 3) are integrated into the saddle shell (2), wherein the spring elements (3, 3') are integrated into the saddle shell (2) by means of undercuts (5, 5'), **characterized in that** the undercuts (5, 5') comprise at least tongues (6, 6') which point backwards in the direction of travel (F) and project from the underside of the saddle shell (2), wherein the saddle frame (7) rests against the tongues (6, 6'), where necessary by means of saddle frame receptacles (8, 8').

2. The bicycle saddle as claimed in claim 1, **characterized in that** the spring elements (3, 3') comprise elastomer elements (4, 4').

3. The bicycle saddle as claimed in one of claims 1 or 2, **characterized in that** the spring elements (3, 3') are replaceable.

4. The bicycle saddle as claimed in one of claims 1 to 3, **characterized in that** the saddle shell (2) is designed to be not completely rigid but is able to deflect slightly when loaded with the rider's weight, so that, in conjunction with a rigid saddle frame, it is designed in such a way that it absorbs tensile loads which result from the rider's weight.

5. The bicycle saddle as claimed in one of claims 1 to 4, **characterized in that** the saddle frame (7) is no different from a saddle frame of a conventional unsprung racing bicycle saddle, that is to say consists of two tubes which are arranged adjacent to one another and run parallel to one another in a central region, taper towards one another at a slight upward angle forwards from this region, and taper away from one another at a slight upward angle backwards from this region.

6. A suspension bicycle saddle system having a bicycle saddle as claimed in one of claims 3 to 5 and having a set of replaceable spring elements (3, 3') which have different hardnesses.

## Revendications

1. Selle de bicyclette (1), comportant une coque de selle (2) et des éléments élastiques (3, 3'), comportant un châssis de selle (7), des éléments élastiques (3, 3') étant intégrés dans la coque de selle (2), les éléments élastiques (3, 3') étant intégrés dans la coque de selle (2) à l'aide de contre-dépouilles (5, 5'), **caractérisée par le fait que** les contre-dépouilles (5, 5') comprennent au moins des languettes (6, 6') qui sont orientées vers l'arrière par rapport à la direction de circulation (F) et qui font saillie par le dessous par rapport à la coque de selle (2), le châssis de selle (7) prenant appui sur les languettes (6, 6'), le cas échéant au moyen de supports de châssis de selle (8, 8').

2. Selle de bicyclette (1) selon la revendication 1, **caractérisée par le fait que** les éléments élastiques (3, 3') comprennent des éléments en élastomère (4, 4').

3. Selle de bicyclette (1) selon l'une des revendications 1 ou 2, **caractérisée par le fait que** les éléments élastiques (3, 3') sont interchangeables.

4. Selle de bicyclette (1) selon l'une des revendications 1 à 3, **caractérisée par le fait que** la coque de selle (2) n'est pas conçue de manière totalement rigide mais peut fléchir un peu sous l'effet d'une sollicitation par le poids du cycliste, si bien qu'elle est conçue pour coopérer avec un châssis de selle rigide pour encaisser les sollicitations en traction dues au poids du cycliste.

5. Selle de bicyclette (1) selon l'une des revendications 1 à 4, **caractérisée par le fait que** le châssis de selle (7) ne présente pas de différences par rapport à un châssis de selle d'une selle de course courante sans ressorts et se compose donc de deux tubes juxtaposés qui sont parallèles entre eux dans une zone centrale, qui se rapprochent l'un de l'autre vers l'avant à partir de cette zone en étant légèrement inclinés vers le haut et qui s'écartent l'un de l'autre vers l'arrière à partir de cette zone en étant légèrement inclinés vers le haut.

6. Système de selle de bicyclette avec suspension, comportant une selle de bicyclette selon l'une des revendications 3 à 5 et comportant un ensemble d'éléments élastiques (3, 3') interchangeables qui présentent des duretés différentes.
